# EUROPEAN PATENT APPLICATION

(11) **EP 2 546 585 A1**
(43) Date of publication of application: **16.01.2013**
(21) Application number: 11425224.0
(22) Date of filing: 19.08.2011
(51) Int. Cl.: F24J 2/52, H01L 31/048

(54) **Integrated system of panels**

(30) Priority: 12.07.2011 IT RM20110362
(71) Applicant: Pula, Mauro, 47865 San Leo (RN) (IT)
(72) Inventor: Pula, Mauro, 47865 San Leo (RN) (IT)
(74) Representative: Scilletta, Andrea

(57) **Abstract**

The present invention concerns an integrated system (1) of panels (5), preferably photovoltaic panels, for covering building structures provided with a plurality of support elements (4) for said panels (5) on a slope.

It comprises a plurality of beams (3), parallel to each other, having two vertical portions (32, 31, 311), and fixed on said support elements (4), for the collection of rainwater, and a plurality of modules (2) above said plurality of beams (3).

Each module (2) comprises a frame (6) for supporting said panel (5), which has sides capable to engage with the respective sides of the frame (6') of a further adjacent module (2'), in order to made also a barrier to prevent the flow of water below the system (1).

This frame (6) is further capable to engage with said vertical portions (32, 31, 311) of said beams (3), in order to allow rainwater drainage on the upper surface of said modules (2).

## Description

The present invention relates to an integrated panel system, preferably integrated photovoltaic panel system and relevant frame.

More particularly, the invention concerns to an integrated system of roof panels of known type, which can be easily integrated into buildings or constructions of different types.

At present, the architectural integration of photovoltaic panels is supported by some regulations in force. Such laws have been promulgated to encourage research in the photovoltaic field, and in particular for the development of innovative solutions for making solar modules no longer just a mere power generator, but also an architectural component, or integral part of the building.

In DM 05/05/2011, innovative applications for architectural integration are promoted through a specific incentivizing rate, with the dual objective of developing a dedicated integrated supply chain and supporting a deeper architectural culture, which can facilitate and accelerate the entry of photovoltaic products in the construction context.

In such DM 05/05/2011, it is also established that, in order to achieve a complete architectural integration of photovoltaic products, the photovoltaic module or the photovoltaic surface has to ensure the production of electricity and the typical functions of a building envelope, such as:
- watertightness and the consequent sealing of the building structure;
- a mechanical seal, comparable with that of the replaced element of the building;
- a thermal resistance that does not compromise the performance of the building envelope.

The complete architectural integration of the photovoltaic module is reached, if the removal of modules compromises the functionality of the building envelope, making the building unsuitable for use.

State of the art provides several solutions on the market that allow a complete integration. An example of which are some special photovoltaic tiles that perform the same waterproofing function of the roof or tiles or bend tiles of traditional type, also producing electricity. These tiles have an active part made of photovoltaic film, made of amorphous silicon, placed on the rigid support.

Another solution is to use waterproof sheaths with flexible modules that can be unrolled directly onto the roofs of the buildings, replacing the traditional layer of waterproof sheath. In these innovative sheaths, the active part is industrially fixed on the surface.

Both solutions are, however, quite expensive and low yield.

Therefore, object of the present invention is to obtain photovoltaic modules that seamlessly integrate with the coverage of buildings in order to allow a complete watertighthness, and the consequent sealing of the building structure, a mechanical seal, which is comparable with that of the replaced building element, and a thermal resistance that does not compromise the performance of the building envelope.

Furthermore, object of the present invention is to achieve the abovementioned results with a reasonable investment.

A further object is to get a system that has a good return for the production of electricity.

It is therefore object of the present invention an integrated system of panels, preferably photovoltaic panels, for covering building structures provided with a plurality of support elements for said panels on a slope, said system being characterized in that it comprises: a plurality of beams, parallel to each other, having two vertical portions, and fixed on said support elements, for the collection of rainwater; a plurality of modules, in a number corresponding to the number of said panels provided in the system, and provided above said plurality of beams, each of said modules comprising a frame for supporting said panel, said frame having sides capable to engage with the respective sides of the frame of a further adjacent module, in order to made also a barrier to prevent the flow of water below the system, said frame further being capable to engage with said vertical portions of said beams, in order to allow rainwater drainage on the upper surface of said modules.

Always according to the invention, said beams could have a plurality of holes or slots on said vertical portions, in order to allow the aeration of said system.

Further according to the invention, said frame could have an upper portion for housing said panel on at least two of its opposite sides, and said frame has a first cavity at the bottom for inserting the upper portion of the frame of a second module.

Still according to the invention, below said first cavity of said frame a second cavity parallel to said first cavity, defined by a wall, could be provided, said second cavity being suitable to insert into a corresponding second cavity of the frame of said second module.

Always according to the invention, said frame could have a lower portion on at least two of said opposite sides, said lower portion being suitable to be coupled to one of said vertical portions of said beam.

Further according to the invention, said lower portion of said frame could be a cavity having a C-shaped cross-section turned towards the bottom, said vertical portions of said beam inserting in said cavity.

Particularly, according to the invention, said vertical portions of said beam could comprise a vertical wall and a cavity having a V-shaped cross-section arranged in correspondence to the top of said wall, for rainwater collection, said V-shaped cross-section cavity having a further wall which inserts in said cavity of said frame.

Still according to the invention, a relief in the bottom central part of said beams could be provided, screws for fixing to said support elements are inserted in said relief, creating two concavities having a U-shaped cross-section for the collection of rainwater.

Further according to the invention, said frame of said modules could be fixed to said vertical portions of said beams by a L-shaped bracket, preferably by means of screws.

Still according to the invention, said beams could be made by press-bending a single plate.

Further according to the invention, said beams could be positioned below said modules at intermediate points, in order to support them when under stress.

Particularly, according to the invention, said system could further comprise a suction device, for the extraction of possible hot air in the space defined between said modules and said support elements and/or in the volume defined inside the beams.

Still according to the invention, said system could further comprise a roof gutter located at the end portion of the system, for the collection of rainwater.

Always according to the invention, said support elements could be insulating panels, preferably of a sandwich type, for thermal insulation of the system.

Further according to the invention, said system could further provide additional fixing means suitable to be inserted between said frames of two modules and said vertical portions of said beams (3), blocking one another.

Further according to the invention, said additional fixing means could comprise a screw, having a head and a stem, a plate, having a hole through which said stem of said screw can be inserted, a spring, inserted along said stem of said screw, a flange, the end of said stem opposite to said head being engaged by screwing to a respective hole and/or by a shear nut.

Advantageously according to the invention, said beams could comprise one or more fixing screws, provided with a hook.

It is further object of the present invention a frame for supporting a panel, preferably a photovoltaic panel, characterized in that it has sides capable to engage with the respective sides of the frame of a further adjacent module, in order to made also a barrier to prevent the flow of water below the system, said frame further being capable to engage with vertical portions of a beams.

Always according to the invention, said frame could have an upper portion for housing said panel on at least two of its opposite sides, and said frame could have a first cavity at the bottom for inserting the upper portion of an adjacent frame, below said first cavity of said frame (6) a second cavity parallel to said first cavity, defined by a wall, could be provided, said second cavity being suitable to insert into a corresponding second cavity of said adjacent frame, and said frame could have a lower portion on at least two of said opposite sides, said lower portion suitable to be coupled to one of said vertical portions of a beam.

Still according to the invention, said lower portion of said frame could be a cavity having a C-shaped cross-section turned towards the bottom, said vertical portions of a beam being insertable in said cavity.

The present invention will be now described, for illustrative but not limitative purposes, with particular reference to the figures of the enclosed drawings, wherein:
figure 1 shows a sectional front view of the covering integrated system according to the invention, applied to a common building;
figure 2 shows a perspective view of a first detail of the system of figure 1;
figure 3 shows a sectional front view of a second detail of the system of figure 1;
figure 4 shows a perspective view of the detail of figure 3;
figure 5 shows a sectional side view of the covering integrated system according to the invention;
figure 6 shows a sectional side view of a detail of figure 5;
figure 7 shows a perspective view of the detail of figure 5;
figures 8A and 8B show perspective views of the beam according to the invention in two variants;
figure 9 shows a perspective view of further fixing means according to the invention, and
figure 10 shows a side view of a particular of the system according to the invention to which fixing means of figure 9 are applied.

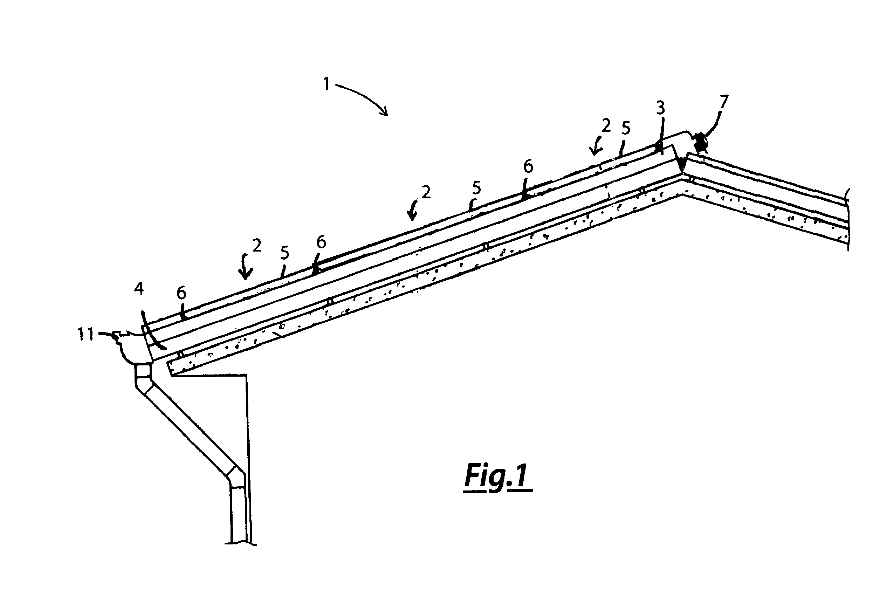

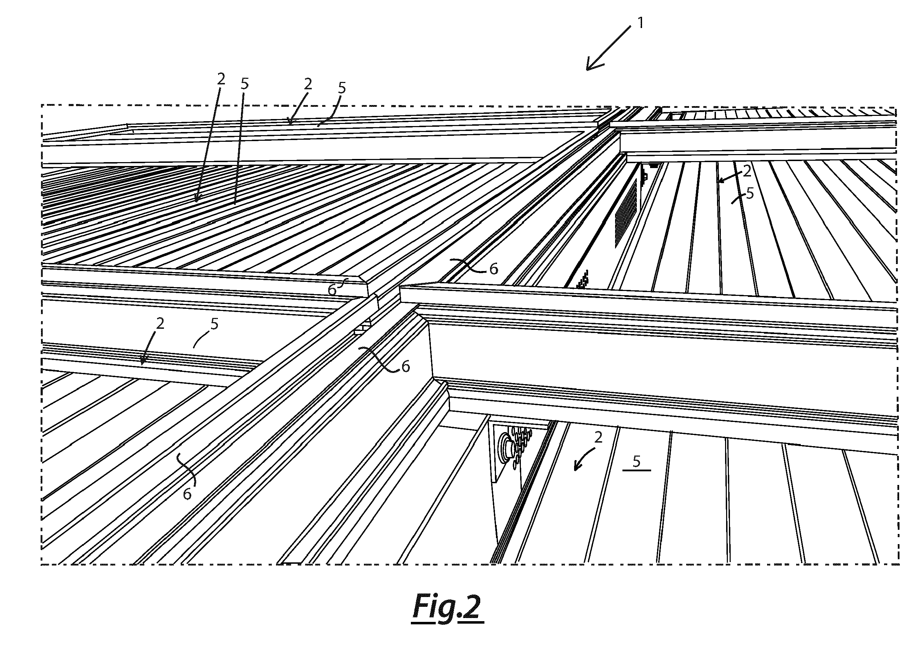

With reference to figures 1 and 2, it is shown the system 1 of modules 2, preferably photovoltaic modules, according to the invention, for covering building structures. This system 1 comprises a plurality of photovoltaic modules 2, positioned side by side, a plurality of beams 3 to support the modules 2, parallel and positioned at regular intervals, arranged longitudinally with respect to the downward direction of the roof, and a plurality of sandwich panels 4, which rest directly upon the floor, made of reinforced concrete or the like, of the building structure.

In particular, modules 2 comprise a panel 5, preferably a photovoltaic panel, whose active area is located above, and a frame 6, in which the panel 5 is installed, having a profile able to slot together the frame 6' of a second module 2' and able to insert in, and engage with hollow profile beams 3.

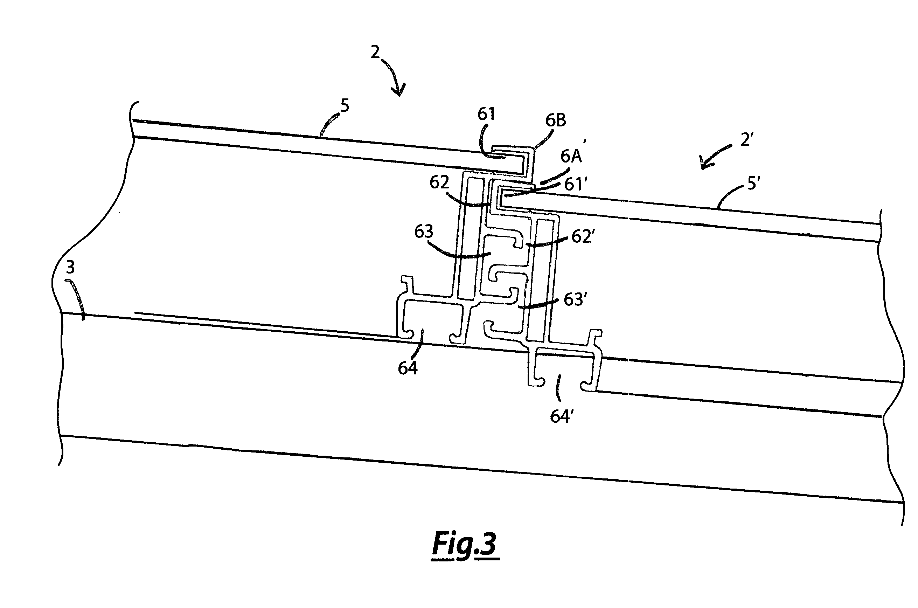

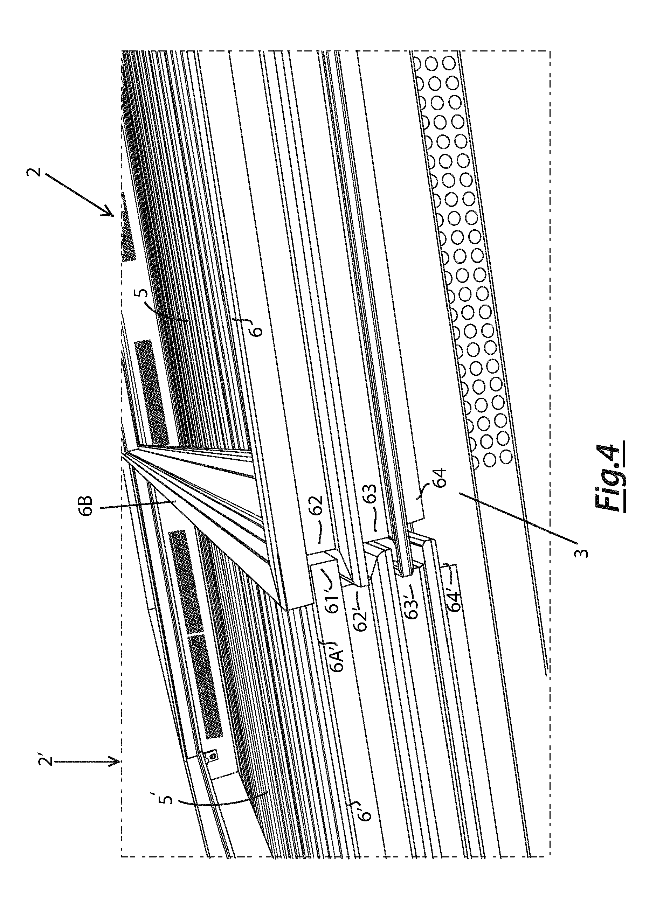

Looking now at figures 3 and 4, it can be noted that said frame 6 has a "comb" profile along the whole perimeter, shaped above by an upper portion 61, in order to block the profile of the photovoltaic panel 5 along its perimeter, followed by a first cavity 62, turned outwards, within which the upper portion 61' of the frame 6' of a second module 2' is inserted, and a second cavity 63, always turned outwards, within which the lower rod of the first concavity 62' of the frame 6' of the second module 2' is inserted. Finally, frame 6 has a third cavity 64, having a "C"-shaped cross-section turned towards the bottom, within which a portion of a beam 3 is inserted. This "comb"-shaped profile allows to easily slot together the panels and to easily adapt the system to cover different forms, such as vaulted surfaces (vaulted roofs).

In addition, through the coupling of said "comb"-shaped profiles of panels, a large continuous and walkable surface can be obtained.

Looking in particular at figures 1 and 3, it can be seen that modules 2, 2' have the upper profiles 6A, 6A' with the vertical portions of the third cavity 64, 64' in contact with the beam 3, and the lower profiles 6B, 6B' with the horizontal portion of the third cavity 64, 64' in contact with the beam 3.

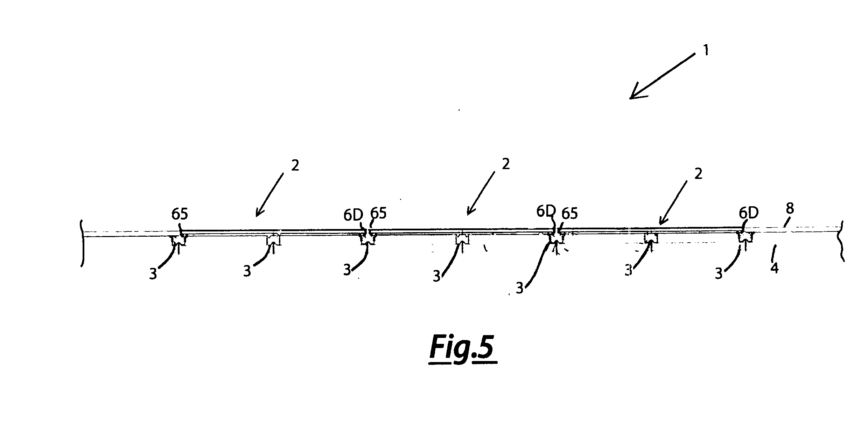

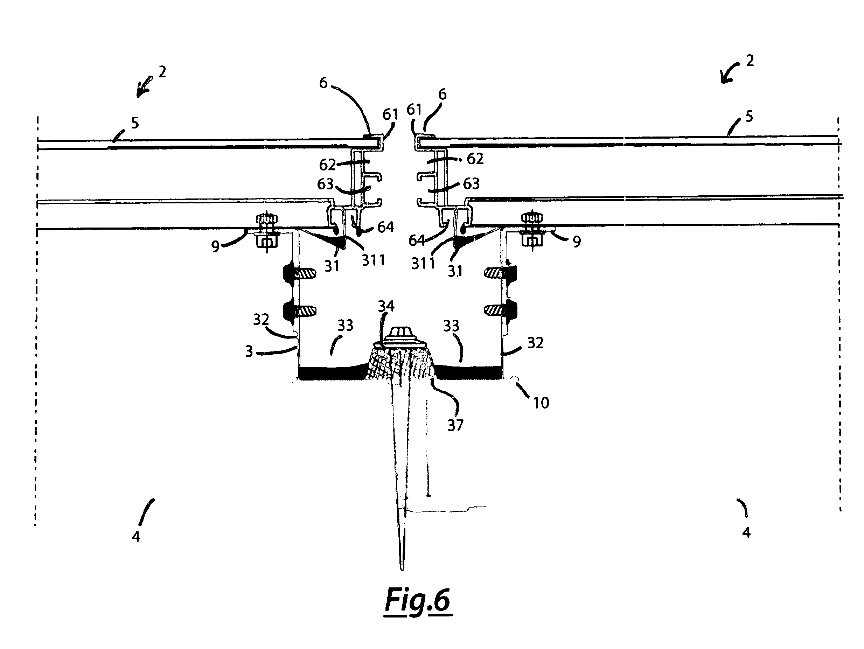

Referring now to figures 5, 6 and 7 the system for fixing the modules 2 to 3 beams can be seen.

The beams 3 have a symmetrical profile having two concave "V"-shaped cross-sections 31 on the upper portion, whose further vertical wall 311 fits into the concavity of the third cavity 64 of the above modules 2. In addition, said beams 3 have also two vertical side walls 32, for supporting the above modules 2 and two lower concavities 33, which have a "U"-shaped cross-section, for collecting rainwater. Finally, said beams 3 comprise a relief 34, positioned in the lower central portion, on which screws are inserted for fixing on sandwich panels 4 or on covering sheets or on different surfaces such as transparent polycarbonate, for areas where there is a skylight.

Said relief 34 is filled inside with foam 37, to nullify the thermal bridge and to prevent further infiltrations.

A gasket 10 is also inserted between the sandwich panel 4 and the beam 3 to prevent possible infiltrations.

Modules 2 are fixed to the beams 3 by "L"-shaped brackets 9 by means of screws.

These beams 3 allow to keep modules at a certain distance, so as to eliminate any thermal expansion of the system.

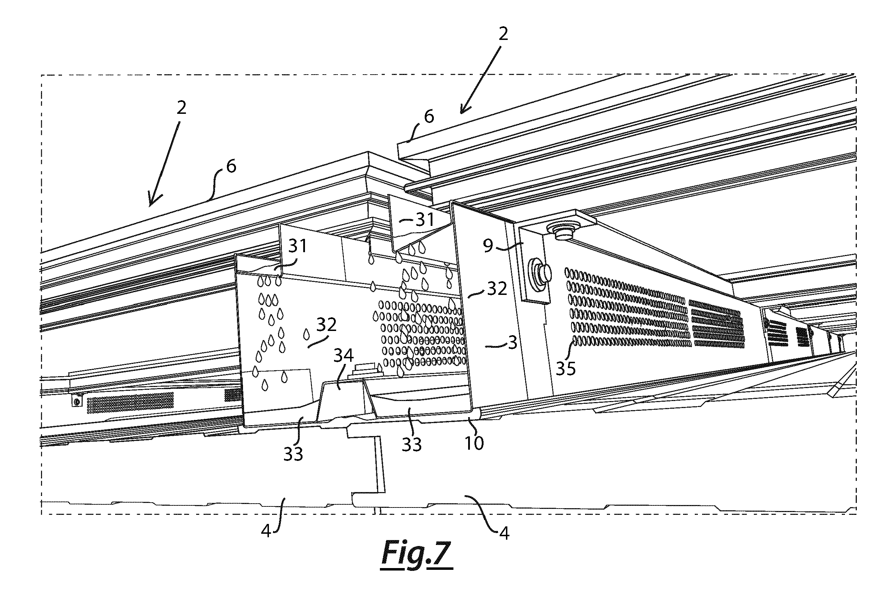

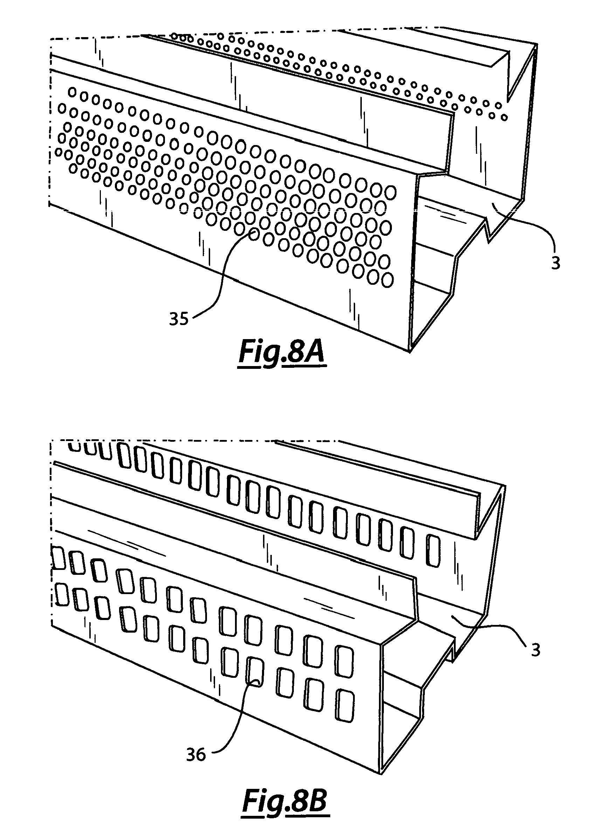

Beams 3 have a plurality of holes 35 or slots 36 (as shown in figures 7, 8A and 8B) to allow a better aeration of the system 1, said holes 35 or slots 36 having a size suitable to prevent the passage of animals. These slots allow an aeration of the system even in case beams 3 were obstructed.

Type and size of the slots are a function of the latitude, the tilt angle and the length of the active surface of the panels.

In addition, hollow profile beams 3 can be obtained by press-bending a single plate, having a profile that supports modules 2 and collects any rainwater flowing from modules 2.

These beams 3 are also positioned below modules 2 at intermediate points, so as to support the panel, especially if under stress, for example, for preventing the module to bend under the weight of snow or rain. The number of said intermediate beams 3 varies depending on the load to which the panels are subjected to.

Modules 2 are replaced by plugging sandwich panels in the side portion of the system 1 (as shown in figure 5).

Looking in particular at figure 1, a suction device 7 can be seen in the upper part of the system 1. Said suction device 7 allows to extract the possible hot air in the volume defined in the inner part of the beams 3 and between modules 2 and sandwich panels 4, so as to facilitate aeration. In addition, the holes 35 or slots 36 of the beams 3, improve self-ventilation of the system 1.

Always looking at figure 1, it can be seen that the water collected in the beam 3 by the different concavities 31 and 33, flows by gravity into and along the beams, up to the gutter 11 located at the end of the system.

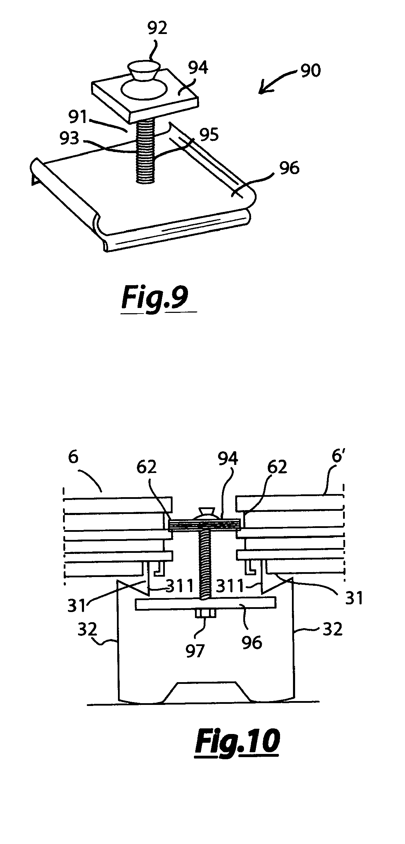

Finally, additional fixing means 90 are shown in figures 9 and 10, comprising a screw 91, having a head 92 and a stem 93, a plate 94, which has a hole through which said rod 93 of said screw 91 can be inserted, and a spring 95, inserted along said rod 93. The end of said rod 93, opposite to the head 92, is engaged by screwing with a flange 96 to a respective hole, or by a shear nut 97.

These fixing means 90 are inserted between the "comb" profiles of frames 6 of the modules 2. More specifically, plate 94 is inserted between the first cavity 62 of a first 6 and a second 6' frame, while flange 95 is inserted below the two "V"-shaped cross-section concavities 31 of the beam 3.

Once inserted said fixing means 90, the shear nut 97 is engaged with said rod 93, allowing a secure mechanical seal and obtaining an effective anti-theft system.

In a preferred embodiment, said beams comprise one or more screws (not shown in the figures), provided with a hook, to which an operator can fix the safety rope while installing or repairing parts of the system.

Therefore, the advantage of the present invention is to provide an innovative integrated system capable of replacing existing roofs, providing a complete insulation and waterproofing of the building structure, without risk of infiltrations.

A further advantage of the present invention is to provide a high heat resistance, without compromising the performance of the building through an aeration system for photovoltaic modules, which prevents overheating during periods of high solar radiation, also due to the properties of insulating sandwich panels and due to the holes made on the beams. Among other things, the insulation obtained can also be separated from the sheet.

Another advantage of the invention is that sandwich panels can be assembled on the site of the plant or transported pre-assembled.

In addition, the combination of the interlocking between the profiles of photovoltaic modules and the support of the beams, allows an excellent mechanical seal, comparable to that of the replaced building element, allowing the operator to work on the walkable surface.

Finally, another advantage is the ease of assembly of the present invention, speeding up the construction time of coverage.

In the above, preferred embodiments have been described and variants have been suggested of the present invention, but it is to be understood that modifications and/or changes can be introduced by those skilled in the art without departing from the relevant scope as defined in the enclosed claims.

## Claims

1. Integrated system (1) of panels (5), preferably photovoltaic panels, for covering building structures provided with a plurality of support elements (4) for said panels (5) on a slope,
said system (1) being **characterized in that** it comprises:
a plurality of beams (3), parallel to each other, having two vertical portions (32, 31, 311), and fixed on said support elements (4), for the collection of rainwater;
a plurality of modules (2), in a number corresponding to the number of said panels (5) provided in the system (1), and provided above said plurality of beams (3), each of said modules (2) comprising a frame (6) for supporting said panel (5), said frame (6) having sides capable to engage with the respective sides of the frame (6') of a further adjacent module (2'), in order to made also a barrier to prevent the flow of water below the system (1), said frame (6) further being capable to engage with said vertical portions (32, 31, 311) of said beams (3), in order to allow rainwater drainage on the upper surface of said modules (2).

2. System (1) according to claim 1, **characterized in that** said beams (3) have a plurality of holes (35) or slots (36) on said vertical portions (31, 32, 311), in order to allow the aeration of said system (1).

3. System (1) according to one of the preceding claims, **characterized in that** said frame (6) has an upper portion (61) for housing said panel (5) on at least two of its opposite sides, and said frame (6) has a first cavity (62) at the bottom for inserting the upper portion (61') of the frame (6') of a second module (2').

4. System (1) according to claim 3, **characterized in that** below said first cavity (62) of said frame (6) a second cavity (63) parallel to said first cavity (62), defined by a wall, is provided, said second cavity (63) being suitable to insert into a corresponding second cavity (63') of the frame (6') of said second module (2').

5. System (1) according to one of the preceding claims, **characterized in that** said frame (6) has a lower portion (64) on at least two of said opposite sides, said lower portion (64) being suitable to be coupled to one of said vertical portions (32, 31, 311) of said beam (3).

6. System (1) according to claim 5, **characterized in that** said lower portion of said frame (6) is a cavity (64) having a C-shaped cross-section turned towards the bottom, said vertical portions (32, 31, 311) of said beam (3) inserting in said cavity (64).

7. System (1) according to one of the preceding claims, **characterized in that** said vertical portions (32, 31, 311) of said beam (3) comprise a vertical wall (32) and a cavity having a V-shaped cross-section (31) arranged in correspondence to the top of said wall (32), for rainwater collection, said V-shaped cross-section cavity (31) having a further wall (311) which inserts in said cavity (64) of said frame (6).

8. System (1) according to one of the preceding claims, **characterized in that** a relief (34) in the bottom central part of said beams (3) is provided, screws for fixing to said support elements (4) are inserted in said relief (34), creating two concavities having a U-shaped cross-section (33) for the collection of rainwater.

9. System (1) according to one of the preceding claims, **characterized in that** said frame (6) of said modules (2) is fixed to said vertical portions (31, 32, 311) of said beams (3) by a L-shaped bracket (9), preferably by means of screws.

10. System (1) according to one of the preceding claims, **characterized in that** said beams (3) are made by press-bending a single plate.

11. System (1) according to one of the preceding claims, **characterized in that** said beams (3) are positioned below said modules (2) at intermediate points, in order to support them when under stress.

12. System (1) according to one of the preceding claims, **characterized in that** it further comprises a suction device (7), for the extraction of the possible hot air in the space defined between said modules (2) and said support elements (4) and/or in the volume defined inside the beams (3).

13. System (1) according to one of the preceding claims, **characterized in that** it further comprises a roof gutter (11) located at the end portion of the system (1), for the collection of rainwater.

14. System (1) according to one of the preceding claims, **characterized in that** said support elements (4) are insulating panels (4), preferably of a sandwich type, for thermal insulation of the system (1).

15. System (1) according to one of the preceding claims, **characterized in that** it further provides additional fixing means (90) suitable to be inserted between said frames (6, 6') of two modules (2) and said vertical portions (32, 31, 311) of said beams (3), blocking one another.

16. System (1) according to claim 15, **characterized in that** said additional fixing means (90) comprise a screw (91), having a head (92) and a stem (93), a plate (94), having a hole through which said stem (93) of said screw (91) can be inserted, a spring (95), inserted along said stem (93) of said screw (91), a flange (96), the end of said stem (93) opposite to said head (92) being engaged by screwing to a respective hole and/or by a shear nut (97).

17. System (1) according to one of the preceding claims, **characterized in that** said beams (3) comprise one or more fixing screws, provided with a hook.

18. Frame (6) for supporting a panel (5), preferably a photovoltaic panel, **characterized in that** it has sides capable to engage with the respective sides of the frame (6') of a further adjacent module (2'), in order to make also a barrier to prevent the flow of water below the system (1), said frame (6) further being capable to engage with vertical portions (32, 31, 311) of a beam (3).

19. Frame (6) according to claim 18, **characterized**
**in that** it has an upper portion (61) for housing said panel (5) on at least two of its opposite sides, and said frame (6) has a first cavity (62) for inserting the upper portion (61') of an adjacent frame (6'),
**in that** below said first cavity (62) of said frame (6) a second cavity (63) parallel to said first cavity (62), defined by a wall, is provided, said second cavity (63) being suitable to insert into a corresponding second cavity (63') of said adjacent frame (6'), and
**in that** it has a lower portion (64) on at least two of said opposite sides, said lower portion (64) suitable to be coupled with one of said vertical portions (32, 31, 311) of a beam (3).

20. Frame (6) according to claim 19, **characterized in that** said lower portion of said frame (6) is a cavity (64) having a C-shaped cross-section turned towards the bottom, said vertical portions (32, 31, 311) of a beam (3) being insertable in said cavity (64).
